# EUROPEAN PATENT APPLICATION

(11) **EP 4 769 912 A1**
(43) Date of publication of application: **01.07.2026**
(21) Application number: 23960156.0
(22) Date of filing: 29.11.2023
(51) Int. Cl.: H02K 11/25

(54) **MOTOR PROTECTOR UNIT AND ELECTRIC COMPRESSOR**

(71) Applicant: Ubukata Industries Co., Ltd., Aichi 457-0828 (JP)
(72) Inventor: YAMAGUCHI, Yoshio, Nagoya-shi, Aichi 457-0828 (JP)
(74) Representative: AOMB Polska Sp. z.o.o.
(86) International application number: PCT/JP2023/042771
(87) International publication number: WO 2025/115136

(57) **Abstract**

A motor protector unit includes: a motor protector including a metal hermetic container configured to be hermetic and including a housing having an opening and an internal space, and a lid plate provided on the housing to cover the opening, two conductive terminal pins provided on the lid plate via an electrically insulating filler material, one end of each conductive terminal pin being inserted into the hermetic container and the other end being exposed outside the hermetic container, and an opening/closing mechanism provided inside the hermetic container to open and close an electrical connection between the two conductive terminal pins; a motor protector holder including a covering part into which at least a part of the motor protector is fitted, and a wing part formed in a plate shape extending in a direction perpendicular to a longitudinal direction of the conductive terminal pins; and a connecting structure that connects and secures the motor protector and the motor protector holder.

## Description

### Technical Field

An Embodiment of the present invention relates to a motor protector unit and an electric compressor.

### Background Art

Conventionally, for example, an electric compressor including a constant-speed motor has been provided with a motor protector for protection from burnout under abnormal conditions. The motor protector includes a thermally responsive plate that operates due to heat generated by the ambient temperature inside the compressor or by current flowing through the motor protector, and operation of the thermally responsive plate opens the circuit to cut off energization to all windings of the motor.

In contrast, for example, in an inverter-driven electric compressor, since phase loss and abnormal current are detected by an inverter control unit, protection means other than the control unit is not essential. However, without protection means other than the control unit, abnormal current to the electric compressor cannot be prevented if the control unit does not operate properly due to a failure of the control unit, erroneous wiring, or the like. Therefore, even in inverter-driven electric compressors, there is an increasing need for protection means separate from the control unit to reliably protect the electric compressor from abnormal current. To address such a need, an externally attached motor protector that does not require modification of the electric compressor may be considered. The externally attached motor protector has poor responsiveness to changes in the internal temperature of the compressor container, such as winding temperature. Therefore, for reliable overheat protection, an internal protector installed inside the compressor container is preferable.

### Citation List

### Patent Literature

Patent Literature 1: Japanese Patent Laid-Open No. 2004-44408

### Summary of Invention

### Technical Problem

However, in a configuration in which a motor protector is installed inside a compressor container, there has been a problem in that workability in attaching the motor protector to the motor is poor.

The present embodiment has been made in view of the above circumstances, and an object thereof is to provide a motor protector unit that can improve workability in attaching a motor protector to a motor using a motor protector holder, and an electric compressor including the motor protector unit.

### Solution to Problem

A motor protector unit according to an embodiment includes: a motor protector including a metal hermetic container configured to be hermetic and including a housing having an opening and an internal space, and a lid plate provided on the housing to cover the opening, two conductive terminal pins provided on the lid plate via an electrically insulating filler material, one end of each conductive terminal pin being inserted into the hermetic container and the other end being exposed outside the hermetic container, and an opening/closing mechanism provided inside the hermetic container to open and close an electrical connection between the two conductive terminal pins; a motor protector holder including a covering part into which at least a part of the motor protector is fitted, and a wing part formed in a plate shape extending in a direction perpendicular to a longitudinal direction of the conductive terminal pins; and a connecting structure that connects and secures the motor protector and the motor protector holder.

An electric compressor according to an embodiment includes: a motor including a compression mechanism and windings; a compressor container housing the compression mechanism and the motor; and the motor protector unit described above housed in the compressor container, wherein the motor protector is connected to a winding on a neutral-point side of the motor.

### Brief Description of Drawings

Figure 1 is a perspective view showing an example of a motor protector unit according to an embodiment, illustrating a state in which a motor protector is fitted into a holder, as viewed from an upper front side.
Figure 2 is a perspective view showing an example of the motor protector unit according to the embodiment, illustrating the state in which the motor protector is fitted into the holder, as viewed from an upper rear side.
Figure 3 is a perspective view showing an example of the motor protector unit according to the embodiment, illustrating the state in which the motor protector is fitted into the holder, as viewed from a lower front side.
Figure 4 is a perspective view showing an example of the motor protector unit according to the embodiment, illustrating a state in which the motor protector is removed from the holder, as viewed from the upper front side.
Figure 5 is a perspective view showing an example of the motor protector unit according to the embodiment, illustrating the state in which the motor protector is removed from the holder, as viewed from the lower front side.
Figure 6 is a front view showing an example of the motor protector unit according to the embodiment.
Figure 7 is a plan view showing an example of the motor protector unit according to the embodiment.
Figure 8 is a cross-sectional view showing an example of the motor protector unit according to the embodiment, illustrating a state in which windings are connected, taken along line X8-X8 of Figure 6.
Figure 9 is a cross-sectional view showing an example of the motor protector unit according to the embodiment, illustrating the state in which the windings are connected, taken along line X9-X9 of Figure 8.
Figure 10 is a cross-sectional view showing an example of the motor protector unit according to the embodiment, illustrating the state in which the windings are connected, taken along line X10-X10 of Figure 8.
Figure 11 is a cross-sectional view showing an example of the motor protector unit according to the embodiment, illustrating the state in which the windings are connected, taken along line X11-X11 of Figure 8.

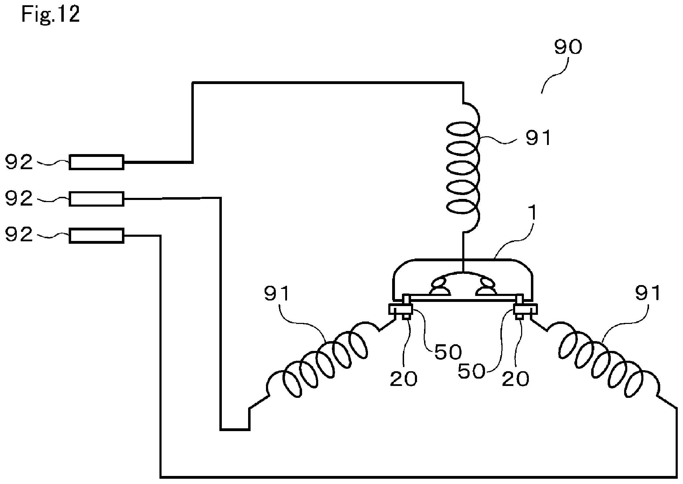

Figure 12 is a schematic view illustrating an example of a connection configuration when the motor protector unit according to the embodiment is applied to a three-phase motor.
Figure 13 is a schematic view illustrating an example of an electric compressor including the motor protector unit according to the embodiment.
Figure 14 schematically illustrates an example of the electric compressor including the motor protector unit according to the embodiment, and is an enlarged view of a peripheral portion of the motor protector unit, taken along line X14-X14 of Figure 13.

### Description of Embodiment

Hereinafter, a motor protector unit 1 according to an embodiment will be described with reference to the drawings. The motor protector unit 1 includes a motor protector 2, a motor protector holder 3, and a connecting structure 70. In the following description, the motor protector holder 3 may be simply referred to as the holder 3.

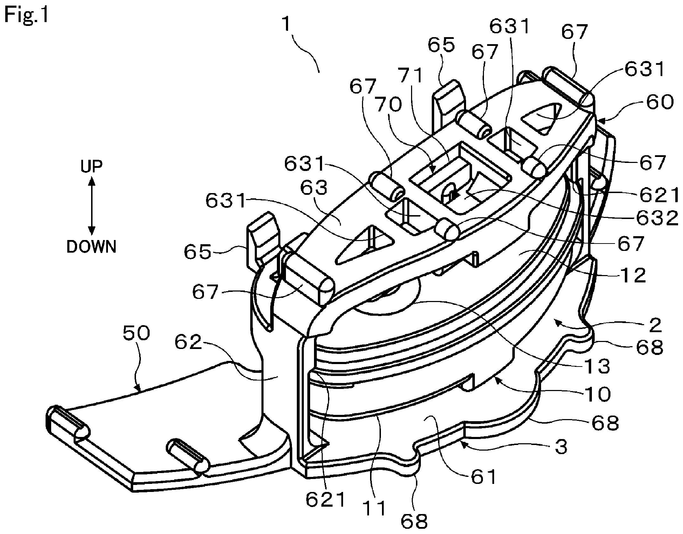

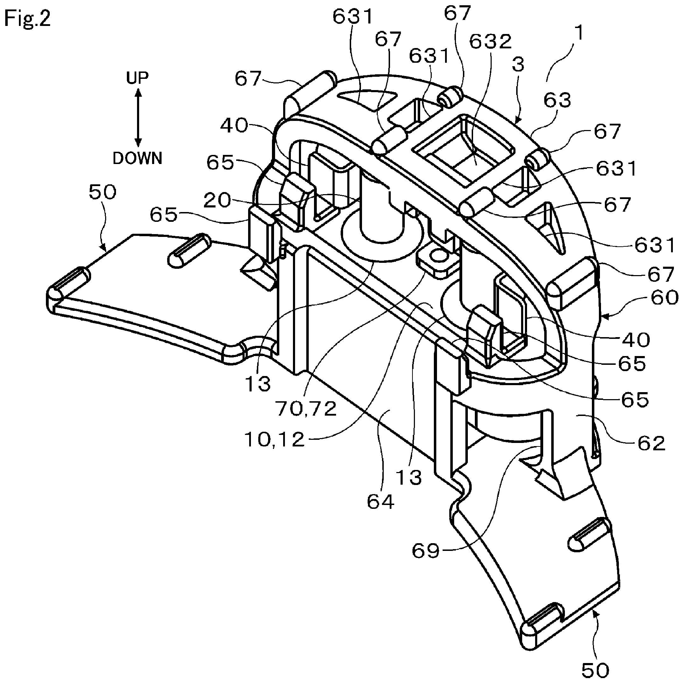

The motor protector 2 is a motor protector suitable for, for example, a motor built in a hermetic electric compressor used in an air conditioner or the like, particularly a three-phase motor. The motor protector 2 is used, for example, in a state where it is connected to the neutral point of the three-phase motor. The holder 3 is a holder for holding the motor protector 2 and attaching the motor protector 2 to the electric compressor. The motor protector unit 1 can be attached to the motor, for example, in an orientation in which the vertical direction shown in Figures 1 and 2 is directed in the direction of gravity. Note that the orientation in which the motor protector unit 1 is attached to the motor is not limited to the above. The motor protector unit 1 can also be attached to the motor, for example, in an orientation inverted upside down or in an orientation rotated by 90 degrees relative to the orientation of Figures 1 and 2.

In the following, an example of the motor protector 2 will first be described. Note that the motor protector employed in the motor protector unit 1 is not limited to the motor protector 2 described below. The motor protector 2 operates to open the circuit when a predetermined abnormal current flows through the motor protector 2 to generate heat, or when the motor itself generates heat due to some abnormality and, as a result, the surrounding ambient temperature rises to a predetermined temperature. When operated, the motor protector 2 thus disconnects the neutral point of the three-phase motor to cut off power supply to all windings of the motor.

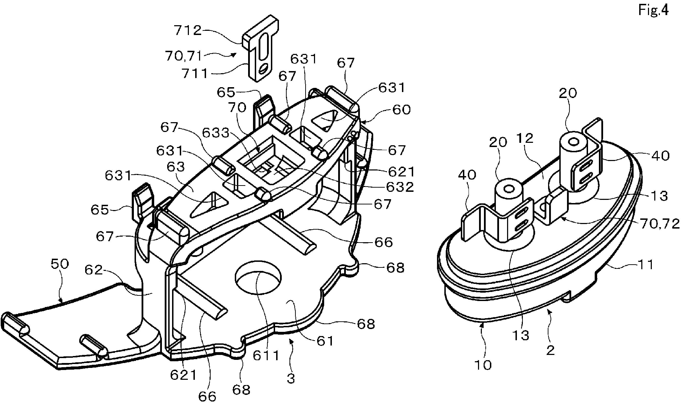

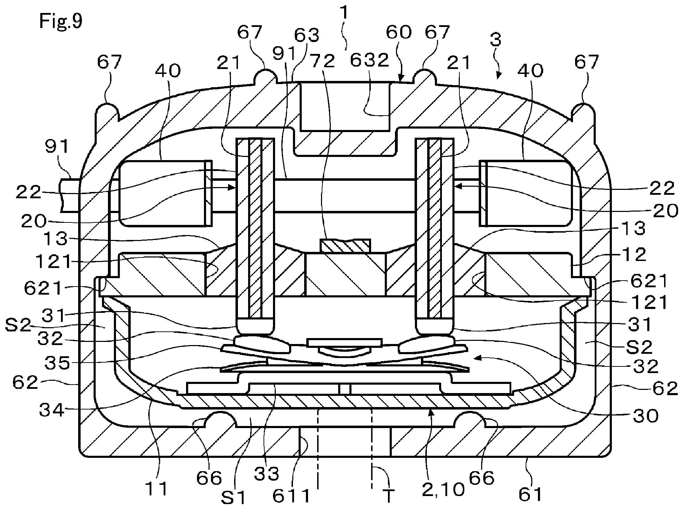

As shown in Figures 9 to 11 and the like, the motor protector 2 includes a hermetic container 10, two conductive terminal pins 20, and an opening/closing mechanism 30. The hermetic container 10 forms an outer shell of the motor protector 2 and has hermeticity. As shown in Figures 4, 5, and 9 to 11, the hermetic container 10 includes a housing 11 and a lid plate 12. The housing 11 is made of, for example, metal, and is formed in a dome shape having one end with an opening and having an internal space. The lid plate 12 is provided at a position covering the opening of the housing 11. The lid plate 12 is, for example, a metal plate-like member and is formed in a shape along the opening portion of the housing 11. In the present embodiment, the hermetic container 10 is formed to be elongated along a plane direction of the lid plate 12. The lid plate 12 is secured to an end portion on the opening side of the housing 11 by welding or the like around the entire circumference thereof, thereby hermetically sealing the opening of the housing 11.

Each of the conductive terminal pins 20 is made of a conductive material such as metal and is formed, for example, in a cylindrical rod shape. The two conductive terminal pins 20 are passed through respective pin holes 121 formed in the lid plate 12, and are each attached to the lid plate 12 in a state in which one end thereof is inserted into the hermetic container 10 and the other end is exposed outside the hermetic container 10. An electrically insulating filler material 13, such as glass, is provided between the inside of each pin hole 121 and the corresponding conductive terminal pin 20. The filler material 13 may also be referred to as an insulating member. Thus, each conductive terminal pin 20 is fixed to the lid plate 12 in an electrically insulated state from the lid plate 12 and in a hermetic state.

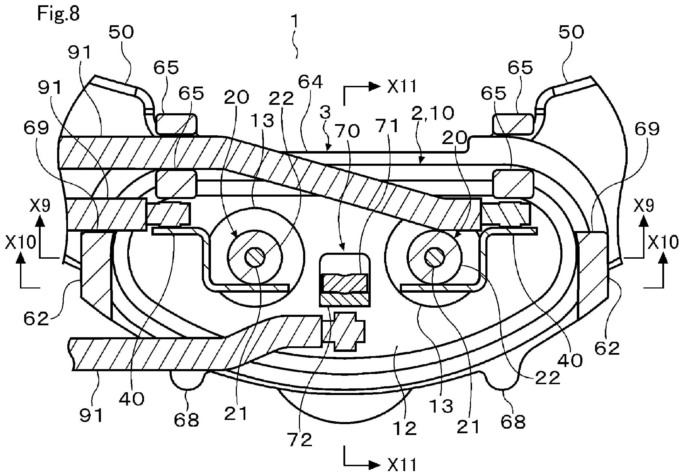

The conductive terminal pins 20 may have, for example, a structure including a plurality of layers having different properties. In the present embodiment, each conductive terminal pin 20 has a two-layer structure. As shown in Figures 8 and 9, the conductive terminal pins 20 can be configured to include a core member 21 and an outer member 22. The core member 21 constitutes the central portion of the conductive terminal pin 20. The outer member 22 is provided outside the core member 21 and constitutes an outer surface of the conductive terminal pin 20. The conductive terminal pins 20 are configured to include, for example, the core member 21 made of copper having high electrical conductivity, and the outer member 22 made of, for example, an iron-nickel alloy or ferritic stainless steel having higher rigidity than the copper core member 21.

The opening/closing mechanism 30 is for opening and closing an electrical connection between the two conductive terminal pins 20. The opening/closing mechanism 30 has a function of operating when an ambient temperature inside the hermetic container 10 becomes equal to or higher than a predetermined temperature to open and interrupt the electrical connection between the two conductive terminal pins 20. The opening/closing mechanism 30 includes two fixed contacts 31, two movable contacts 32, a support 33, an elastic plate 34, and a thermally responsive plate 35. The opening/closing mechanism 30 is provided inside the hermetic container 10. Accordingly, the fixed contacts 31, the movable contacts 32, the support 33, the elastic plate 34, and the thermally responsive plate 35 are all provided inside the hermetic container 10.

The fixed contacts 31 are made of a conductive metal material, such as a silver oxide alloy and a clad material of copper or a copper alloy. The two fixed contacts 31 are provided inside the hermetic container 10 and are electrically connected to the conductive terminal pins 20. Each fixed contact 31 is secured, for example by welding, to an end portion of the corresponding conductive terminal pin 20 on the inside of the hermetic container 10. In this case, after the fixed contact 31 is welded to the conductive terminal pin 20, it is preferable to align the heights of the fixed contacts 31 by plastically deforming the fixed contacts 31 through pressing or the like.

The two movable contacts 32 correspond to the two fixed contacts 31, respectively. Like the fixed contacts 31, the movable contacts 32 are made of a conductive metal material, for example, a silver oxide alloy and a clad material of copper or a copper alloy. The two movable contacts 32 are provided on the thermally responsive plate 35 and face the respective fixed contacts 31. The movable contacts 32 are formed to protrude substantially hemispherically from a surface of the thermally responsive plate 35 on the lid plate 12 side toward the lid plate 12. The movable contacts 32 are secured to the thermally responsive plate 35 by, for example, welding.

The support 33 is fixed to an inner surface of the housing 11 and has a function of supporting the elastic plate 34 and the thermally responsive plate 35. The support 33 is formed, for example, by bending a rigid elongated metal plate. Both end portions of the support 33 in the longitudinal direction are bent so as to be parallel to the inner surface of the housing 11 and are secured to the inner surface of the housing 11 by welding or the like. The central portion of the support 33 in the longitudinal direction is spaced from the inner surface of the housing 11.

The elastic plate 34 has a function of elastically supporting the thermally responsive plate 35. The elastic plate 34 is made of, for example, a thin metal plate that can be elastically deformed, and is formed, for example, in a substantially oval shape as a whole. The thermally responsive plate 35 is elastically connected to the elastic plate 34 by welding or the like, directly or via another member. In this case, the elastic plate 34 is supported by the support 33 in a double-cantilever state with the central portion in the longitudinal direction of the motor protector 2 as a fulcrum.

The thermally responsive plate 35 has a function of moving the movable contacts 32 in a direction away from the fixed contacts 31 when the ambient temperature inside the hermetic container 10 becomes equal to or higher than a predetermined temperature, that is, when the temperature of the thermally responsive plate 35 itself becomes equal to or higher than the predetermined temperature. The thermally responsive plate 35 is, for example, an electrically conductive thin bimetal or trimetal formed, by drawing or the like, into a shallow dish shape. The thermally responsive plate 35 is formed in an oval shape elongated in the longitudinal direction of the motor protector 2 as a whole. The two movable contacts 32 are provided on the surface of the thermally responsive plate 35 on the lid plate 12 side at respective end portions of the oval shape by welding or the like.

In a normal state in which the thermally responsive plate 35 is not operating, the thermally responsive plate 35 keeps the movable contacts 32 in contact with the respective fixed contacts 31 to maintain a closed state between the two fixed contacts 31. When the ambient temperature inside the hermetic container 10 reaches a predetermined temperature, the thermally responsive plate 35 operates to deform such that the movable contacts 32 move away from the respective fixed contacts 31, to open the fixed contacts 31.

Namely, in the normal state in which the thermally responsive plate 35 is not operating, the thermally responsive plate 35 is curved such that both end sides in the longitudinal direction, i.e., the sides on which the two movable contacts 32 are provided, are curved toward the lid plate 12 with the central portion in the longitudinal direction as an apex. Therefore, the fixed contacts 31 are in contact with the respective opposing movable contacts 32, and thus electrical conduction is established between the two fixed contacts 31 via the movable contacts 32 and the thermally responsive plate 35. In this case, the two conductive terminal pins 20 are electrically connected via the fixed contacts 31, the movable contacts 32, and the thermally responsive plate 35. Further, the two conductive terminal pins 20 and the hermetic container 10 are electrically connected via the fixed contacts 31, the movable contacts 32, the thermally responsive plate 35, the elastic plate 34, and the support 33.

When the ambient temperature inside the hermetic container 10 rises to a predetermined temperature at which the thermally responsive plate 35 operates, the thermally responsive plate 35 operates and deforms in a direction in which its curvature is inverted. As a result, the movable contacts 32 are separated from the fixed contacts 31, and the electrical connection between the two fixed contacts 31, i.e., between the two conductive terminal pins 20, and between the conductive terminal pins 20 and the hermetic container 10, is interrupted.

The motor protector 2 may further include heat generating members 40 as shown in Figures 2, 4, 6, 8, and the like. The heat generating members 40 are located outside the hermetic container 10 and are connected and secured to the respective conductive terminal pins 20. A motor winding 91 is attached, for example, to each heat generating member 40 and is electrically connected to the conductive terminal pin 20 via the heat generating member 40. In this case, the winding 91 connected to the heat generating member 40 does not directly contact the conductive terminal pin 20. The heat generating members 40 are made of a material different from that of the conductive terminal pins 20. The heat generating members 40 are each located between the conductive terminal pin 20 and the motor winding 91 and have a function of generating heat when current flows therethrough. Each heat generating member 40 is formed by bending, for example, a conductive metal plate, and is provided on the corresponding conductive terminal pin 20 by welding or the like. Note that the connection of the heat generating member 40 and the winding 91 may be achieved by connecting a lead wire to the heat generating member 40 in advance and electrically connecting the lead wire to the winding 91.

The heat generating members 40 are made of a conductive material having an electrical resistivity higher than that of any of the conductive terminal pins 20, the fixed contacts 31, the movable contacts 32, the elastic plate 34, and the thermally responsive plate 35. As a material of the heat generating member 40, for example, an electrical resistance material or an electric heating material, such as nickel-chromium, copper-nickel, copper-manganese, and iron-chromium, can be used. The heat generating member 40 is formed, for example, by bending a plate material of an electric heating material.

In the present embodiment, an electrical resistance value between the two heat generating members 40 is set within a range of 4 to 8 times an electrical resistance value between the two conductive terminal pins 20. Therefore, when current flowing between the two heat generating members 40 and current flowing between the two conductive terminal pins 20 have the same current value, the amount of heat generated between the two heat generating members 40 is greater than the amount of heat generated between the two conductive terminal pins 20. Note that the electrical resistance value between the heat generating members 40 includes the electrical resistance value of an electrical path existing between the heat generating members 40, i.e., the conductive terminal pins 20, the fixed contacts 31, the movable contacts 32, and the thermally responsive plate 35.

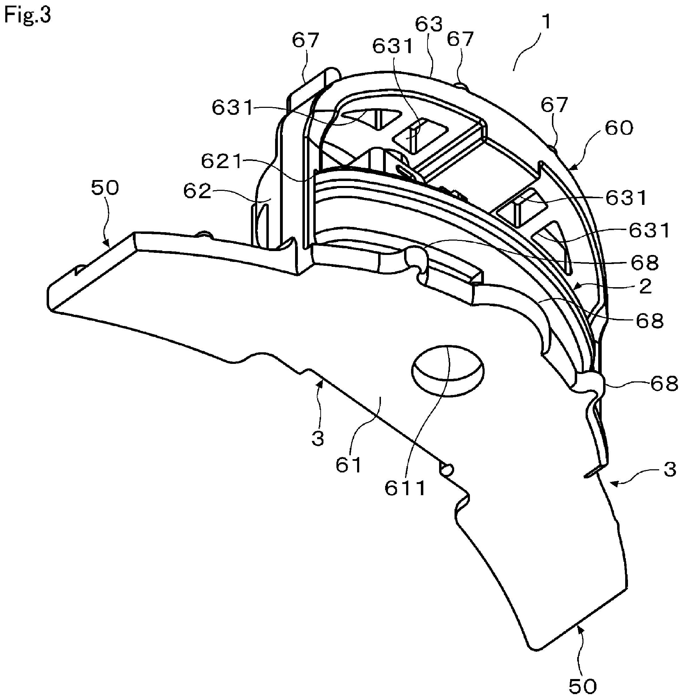

Next, the holder 3 will be described. The holder 3 is for attaching the motor protector 2 to the electric compressor. The holder 3 is made of, for example, an electrically insulating resin material. As shown in Figures 1 to 8, the holder 3 includes wing parts 50 and a covering part 60. In the present embodiment, the wing parts 50 and the covering part 60 are integrally formed. As used herein, the phrase "the wing parts 50 and the covering part 60 are integrally formed" means that the wing parts 50 and the covering part 60 have a seamless structure that is formed by resin molding or the like without bonding or joining.

The wing parts 50 are portions that contact the motor windings when the motor protector unit 1 is attached to the motor. The wing parts 50 have a function of increasing a contact area when attached to the motor to stabilize the posture of the holder 3. The wing parts 50 extend outward on respective sides with respect to the covering part 60. The wing parts 50 are formed, for example, in a flat plate shape extending in a direction perpendicular to the longitudinal direction, i.e., the extending direction, of the conductive terminal pins 20 with respect to the covering part 60. As also shown in Figures 1 to 5 and the like, the wing parts 50 are formed in a shape that gently draws an arc as a whole. A back surface of the wing parts 50 and the covering part 60, i.e., a surface opposite to the motor protector 2 side, is formed as a flat surface without a protruding portion.

The covering part 60 is provided at the central position in the longitudinal direction of the holder 3. At least a part of the motor protector 2 is fitted into the covering part 60, and the covering part 60 partially surrounds the heat generating members 40. The covering part 60 includes, for example, a lower surface part 61, two side surface parts 62, an upper surface part 63, and a back surface part 64. The lower surface part 61 is formed in the same plane continuous with the wing parts 50 and constitutes a bottom surface of the covering part 60. The two side surface parts 62 extend in a direction perpendicular to the lower surface part 61 at positions separated from each other. The upper surface part 63 is provided at a position facing the lower surface part 61 and connects end portions of the two side surface parts 62 on a side opposite to the lower surface part 61.

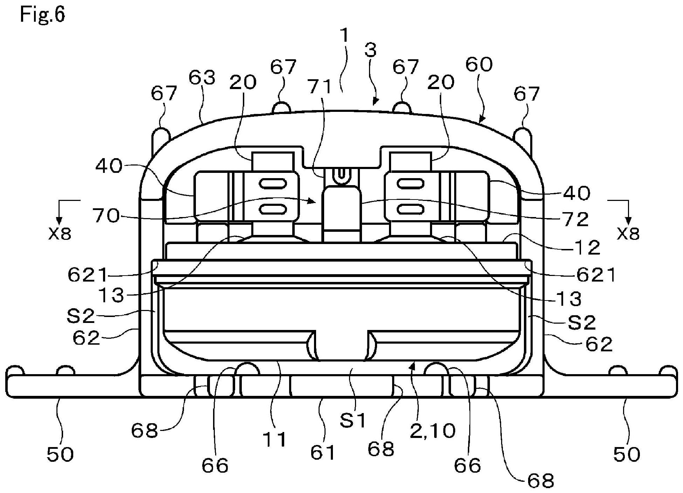

The covering part 60 is configured, as a whole, to have a rectangular annular or tubular shape defined by the lower surface part 61, the two side surface parts 62, and the upper surface part 63, thereby allowing the motor protector 2 to be accommodated therein. As shown in Figure 6 and the like, in a state where the motor protector 2 is accommodated inside the covering part 60, a gap S1 exists between the lower surface part 61 and the motor protector 2, and a gap S2 exists between each side surface part 62 and the motor protector 2.

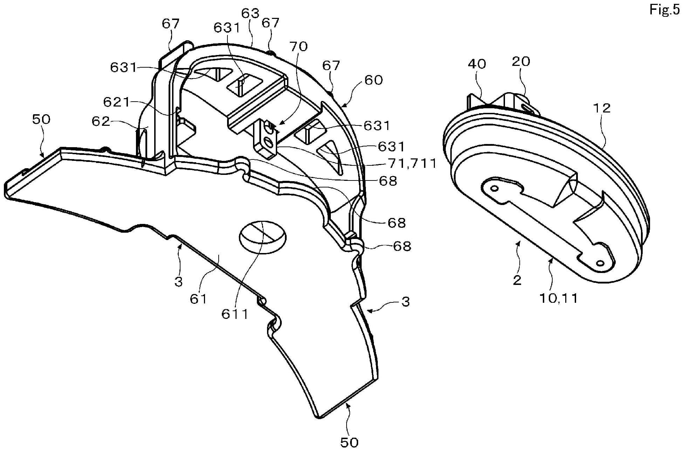

Further, as shown in Figure 2 and the like, the back surface part 64 is formed in a plate shape and is connected to the lower surface part 61 and to portions of the two side surface parts 62 near the lower surface part 61. The back surface part 64 covers a side of the hermetic container 10 of the motor protector 2 accommodated in the covering part 60. In this case, as shown in Figures 4 and 5, the motor protector 2 is fitted into the covering part 60 from a side opposite to the back surface part 64.

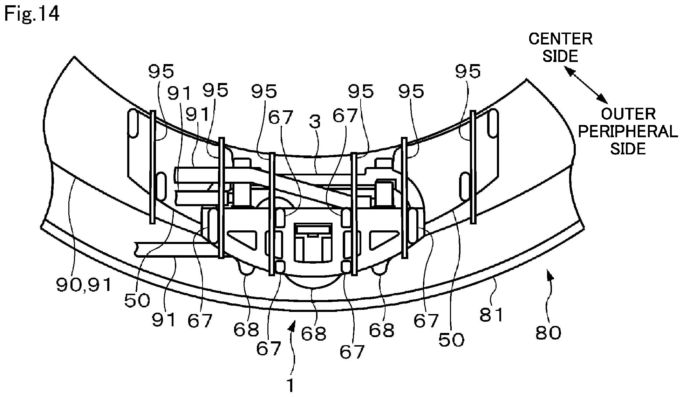

The back surface part 64 improves mechanical strength of the holder 3 and also has a function of ensuring an insulation distance from the motor, the compression mechanism, and the like when the motor protector unit 1 is attached to the motor. Further, the motor protector unit 1 is attached to a motor 90 using, for example, binding strings 95 as shown in Figure 14. In this case, the back surface part 64 suppresses the binding strings 95 from contacting the motor protector 2, thereby suppressing the binding strings 95 from contacting the high-temperature motor protector 2 and being burnt off.

The holder 3 includes a lower hole 611, restricting parts 621 and 641, flow-through parts 631, a recessed part 632, and an upper hole 633. As shown in Figures 4 and 9 and the like, the lower hole 611 is a hole formed through the central portion of the lower surface part 61. The lower hole 611 is provided at a position facing the central apex portion of the housing 11 included in the hermetic container 10 of the motor protector 2 accommodated in the covering part 60.

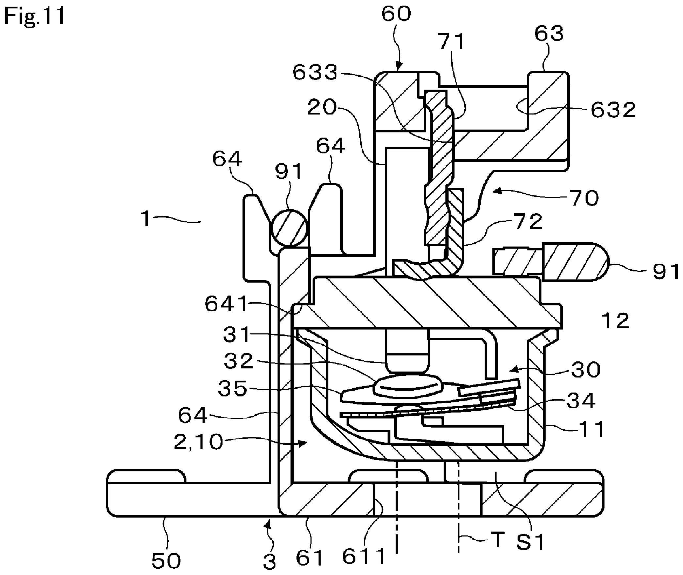

The restricting part 621 is provided on the side surface part 62 as shown in Figure 9. The restricting part 641 is provided on the back surface part 64 as shown in Figure 11. Each of the restricting parts 621 and 641 is formed in a shape that engages with a part of an edge of the lid plate 12 by the side surface part 62 and the back surface part 64 partially having, for example, a stepped shape. The restricting parts 621 and 641 restrict movement of the motor protector 2 toward the upper surface part 63 by contacting an edge portion of the lid plate 12 included in the motor protector 2 accommodated in the covering part 60. In other words, the restricting parts 621 and 641 have a function of defining a distance between the lower surface part 61 and the motor protector 2 and a distance between the upper surface part 63 and the motor protector 2.

The flow-through parts 631, the recessed part 632, and the upper hole 633 are provided on the upper surface part 63. Each flow-through part 631 is a hole formed through the upper surface part 63 and is formed to have such a shape and size that refrigerant can flow therethrough. As shown in Figures 1, 2, 4, and 9 to 11, the recessed part 632 is a portion formed by recessing a part of the upper surface part 63 from an outside of the upper surface part 63. The recessed part 632 is provided at a center position in the longitudinal direction of the upper surface part 63, i.e., a position corresponding to the vicinity of the center of the lid plate 12 included in the motor protector 2. As shown in Figures 1, 4, 10, and 11, the upper hole 633 is provided inside the recessed part 632 and is formed through a bottom of the recessed part 632. In other words, the upper hole 633 is formed through the upper surface part 63.

The holder 3 further includes holding parts 65, receiving parts 66, guide parts 67, protruding parts 68, and openings 69. As shown in Figure 8, each holding part 65 has a function of pinching and holding the motor winding 91 connected to the motor protector 2. The holding parts 65 are provided on respective sides with respect to the center in the longitudinal direction of the motor protector 2. The holding parts 65 can hold, for example, one of three windings 91 of a three-phase motor connected to the motor protector 2. In this case, the holder 3 can be arranged such that each of the three windings 91 of the three-phase motor connected to the motor protector 2 is drawn out in the same direction, i.e., drawn out from one side, without contacting the heat generating members 40, the conductive terminal pins 20, or the like.

Further, the holder 3 has the holding parts 65 at positions symmetric with respect to the center in the longitudinal direction of the motor protector 2. Therefore, one of the three windings 91 can be drawn out in a direction different from the other two. Even in this case, since the two windings 91 extending to opposite sides can be held by the holding parts 65, assembly workability to the motor is improved.

As shown in Figures 4, 6, and 9 to 11, the receiving parts 66 are provided on an inner surface side of the lower surface part 61. Each receiving part 66 is formed, for example, in a shape having a cross section protruding in a semicircular manner from the lower surface part 61 toward the upper surface part 63. Further, the receiving parts 66 extend linearly in a direction perpendicular to the longitudinal direction of the holder 3, i.e., in a width direction of the holder 3. Two receiving parts 66 are respectively provided on opposite sides with the center in the longitudinal direction of the lower surface part 61 therebetween. The receiving parts 66 are for providing the gap S1 between the motor protector 2 and the lower surface part 61.

Specifically, in a state where the motor protector 2 is arranged in the covering part 60, a portion of the motor protector 2 on a side opposite to the lid plate 12 is separated from the receiving parts 66 or is in contact with the receiving parts 66. In this case, since the receiving parts 66 protrude from the lower surface part 61 toward the upper surface part 63, the gap S1 is provided between the motor protector 2 and the lower surface part 61 even when the motor protector 2 is in contact with the receiving parts 66.

As shown in Figures 1, 4, 6, and 7, a plurality of guide parts 67 are provided on the upper surface part 63 so as to protrude outward from the upper surface part 63. As shown in Figure 14, the motor protector unit 1 is attached to the coil windings 91 of the motor 90 by being bound with the binding strings 95 in a state where the motor protector 2 is fitted into and held by the holder 3. The binding strings 95 are made of, for example, a resin material having electrical insulation and flexibility. The holder 3 holding the motor protector 2 is attached to the windings 91 in the compressor container 81 in an orientation in which the heat generating members 40 are exposed to a refrigerant flow generated during normal operation of a compressor 80, that is, when the compressor 80 is operating normally.

The guide parts 67 each have a function of guiding the binding string 95, i.e., maintaining the position of the binding string 95 at a fixed position. In other words, the binding strings 95 binding the motor protector unit 1 are prevented from positional deviation by being caught on the guide parts 67. Consequently, the motor protector unit 1 can be reliably fixed to the motor. The guide parts 67 may each have, for example, a groove shape formed in the upper surface part 63.

As shown in Figures 1, 3, 4, 5, 7, 8, and 14, one or more protruding parts 68 are provided at an edge portion of the lower surface part 61 and are formed in a shape protruding outward from an arc shape of the lower surface part 61 and the wing parts 50. As shown in Figure 14, when the motor protector unit 1 is attached to the motor 90 in the compressor container 81, the protruding parts 68 contact an inner wall of the compressor container 81 before the motor protector 2, thereby having a function of suppressing the motor protector 2 from directly contacting the compressor container 81. This makes it possible to prevent the motor protector 2, which is an energized part, from approaching and electrically contacting the inner wall of the compressor container 81, which is a non-energized part, due to vibration of the compressor 80, an assembly defect of the motor protector unit 1, or the like.

As shown in Figure 2 and the like, the openings 69 are formed between the side surface parts 62 and the back surface part 64 near the lower surface part 61. The openings 69 allow communication between the inside and the outside of the covering part 60 and are configured to allow refrigerant to flow therethrough.

The connecting structure 70 is a structure for connecting and securing the motor protector 2 and the holder 3, as shown in Figure 11 and the like. In the present embodiment, the connecting structure 70 connects and secures the motor protector 2 and the holder 3 in a non-separable manner. As used herein, the phrase "connected and secured in a non-separable manner" means that the motor protector 2 and the holder 3 are connected and secured in such a manner that they cannot be separated from each other unless some structure is destroyed or removed. As shown in Figures 9 to 11, the connecting structure 70 connects the motor protector 2 and the holder 3 with gaps S1 and S2 that allow refrigerant to pass between the motor protector 2 and the holder 3.

In the present embodiment, the connecting structure 70 connects the motor protector 2 and the holder 3 in a state where the motor protector 2 is suspended from the upper surface part 63 of the holder 3. Accordingly, the holder 3 holds the motor protector 2 in an orientation in which the conductive terminal pins 20 extend in the vertical direction and protrude upward.

The connecting structure 70 can be configured to include a holder-side member 71 and a protector-side member 72. Both the holder-side member 71 and the protector-side member 72 are made of a metal material. As shown in Figures 5, 10, and 11, the holder-side member 71 is provided on the upper surface part 63, and a portion thereof extends through the upper surface part 63 toward the lower surface part 61.

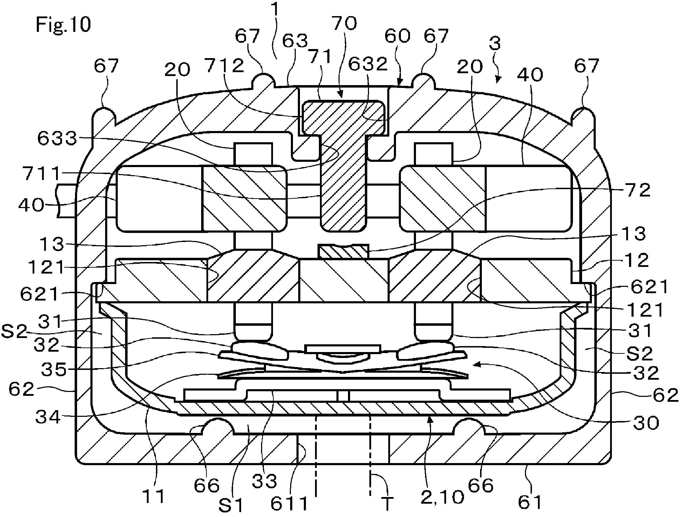

The holder-side member 71 is made of metal and is formed, for example, in a T shape as a whole, as shown in Figures 4 and 10. In this case, the holder-side member 71 includes an insertion portion 711 and an engaging portion 712. The insertion portion 711 is a portion of the T shape that extends through the upper surface part 63 toward the lower surface part 61. The engaging portion 712 is a portion of the T shape that extends in a direction perpendicular to the extending direction of the insertion portion 711.

When the holder-side member 71 is attached to the holder 3, the insertion portion 711 is inserted into the upper hole 633 from an outside of the upper surface part 63 toward an inside thereof. Then, the engaging portion 712 is engaged with a bottom portion of the recessed part 632, i.e., a portion around the upper hole 633, and the insertion portion 711 extends through the upper surface part 63 toward the lower surface part 61.

The protector-side member 72 is made of metal and is formed, for example, in an L shape. One side of the L shape of the protector-side member 72 is welded and secured to the lid plate 12. As shown in Figure 11, the other side of the L shape of the protector-side member 72 extends from the lid plate 12 in a direction perpendicular thereto and is welded and secured to the insertion portion 711 of the holder-side member 71. Thus, the motor protector 2 is fixed to the holder 3 in an orientation suspended from the upper surface part 63 by the holder-side member 71 and the protector-side member 72 being connected to each other.

Here, at the time of securing the motor protector 2 to the holder 3 by the connecting structure 70, for example as shown in Figures 10 and 11, a rod-shaped jig T is passed through the lower hole 611 to push up the motor protector 2 and press the periphery of the lid plate 12 against the restricting parts 621 and 641. Then, in a state where the periphery of the lid plate 12 is pressed against the restricting parts 621 and 641 by the jig T, the holder-side member 71 and the protector-side member 72 are welded and secured. Thus, the motor protector 2 and the holder 3 are fixed such that the holder 3 is sandwiched between the engaging portion 712 of the holder-side member 71 and the lid plate 12. As a result, the motor protector 2 and the holder 3 are firmly fixed to each other with reduced looseness.

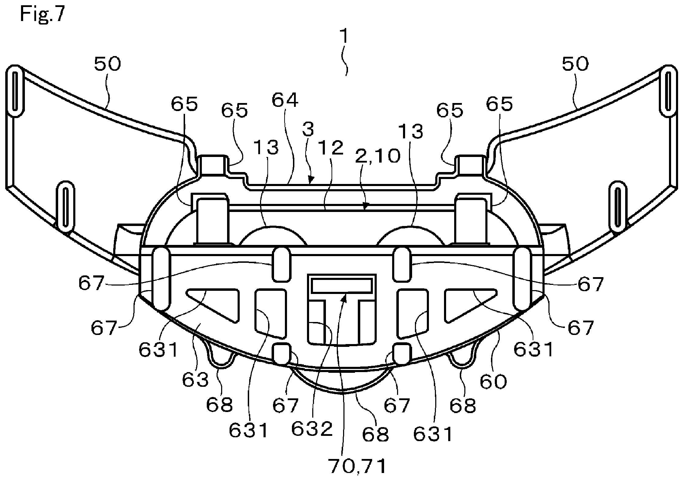

Next, the electric compressor 80 to which the motor protector unit 1 is attached and a method of attaching the motor protector unit 1 to the electric compressor 80 will be described. The motor protector 2 is used, for example, in a state where it is connected to the neutral point of the motor 90, as shown in Figure 7. In this case, power-source-side ends of the three-phase windings 91 of the motor 90 are connected to a three-phase power source via respective power terminals 92. As for neutral-point-side ends of the windings 91, two of the three-phase windings 91 are connected to the heat generating members 40. The windings 91 connected to the heat generating members 40 are electrically connected to the fixed contacts 31 via the conductive terminal pins 20. The remaining one winding of the three-phase windings 91 is secured, for example by welding, to a metal portion outside the hermetic container 10, such as the lid plate 12. The winding 91 connected to the lid plate 12 is electrically connected to the movable contacts 32 via the housing 11, the support 33, the elastic plate 34, and the thermally responsive plate 35. Note that the connection of the heat generating member 40 and the winding 91 may be achieved by connecting a lead wire to the heat generating member 40 in advance and electrically connecting the lead wire to the winding 91.

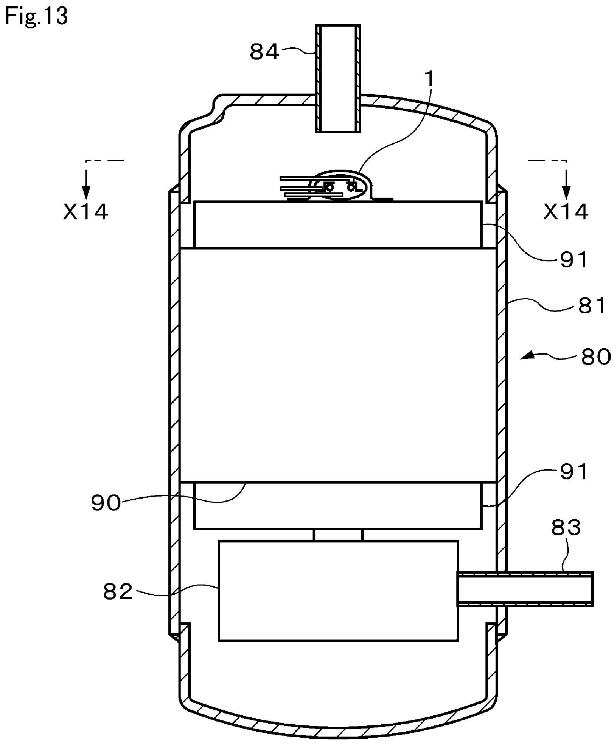

Figures 13 and 14 illustrate an example in which the motor protector unit 1 having the above configuration is attached to the hermetic electric compressor 80. In the following description, the hermetic electric compressor 80 may be simply referred to as the compressor 80. The compressor 80 is a fully hermetic or semi-hermetic electric compressor for refrigerant and can be used, for example, in an air conditioner or the like to constitute a part of a refrigeration cycle. The compressor 80 is not limited to a small to medium-capacity compressor having a relatively small capacity and may be a large-capacity compressor.

The compressor 80 includes the compressor container 81, a compression mechanism 82, the motor 90, and the motor protector unit 1. The compressor container 81 is a container having hermeticity and pressure resistance and constitutes an outer shell of the compressor 80. The compression mechanism 82 and the motor 90 are both provided in the compressor container 81. In other words, the compressor container 81 houses the compression mechanism 82 and the motor 90 including the windings 91. The compression mechanism 82 has a function of compressing and discharging refrigerant. As the compression mechanism 82, for example, not only a scroll type but also a rotary vane type can be employed.

The motor 90 includes the windings 91 and drives the compression mechanism 82. Further, a suction pipe 83 and a discharge pipe 84 are hermetically connected to the compressor container 81. The suction pipe 83 is for guiding refrigerant from an unillustrated heat exchanger or the like to the compression mechanism 82 in the compressor container 81. The discharge pipe 84 is for discharging refrigerant compressed by the compression mechanism 82 and sending it to the unillustrated heat exchanger. In the present specification, the refrigerant includes refrigerating machine oil, i.e., lubricating oil, for lubricating the compression mechanism 82.

As shown in Figure 14, the motor protector unit 1 is attached to the coil windings 91 of the motor 90 by being bound with the binding strings 95. The binding strings 95 are made of, for example, a resin material having electrical insulation and flexibility. The motor protector unit 1 is attached to the windings 91 in the compressor container 81 in an orientation in which the heat generating members 40 are exposed to a refrigerant flow generated during normal operation of the compressor 80, that is, when the compressor 80 is operating normally.

During operation of the compressor 80, the inside of the compressor container 81 is filled with gaseous refrigerant containing mist-like lubricating oil, and a refrigerant flow from the suction pipe 83 toward the discharge pipe 84 is generated. Therefore, the motor protector unit 1 is provided, for example, at a position downstream of the compression mechanism 82 in the compressor container 81, i.e., for example, between the motor 90 and the discharge pipe 84. During operation of the compressor 80, a part of the refrigerant flowing from the suction pipe 83 toward the discharge pipe 84 enters and exits through the openings 69 on the front side and the rear side of the motor protector unit 1 and flows through the gaps S1 and S2, thereby cooling the motor protector 2.

According to the embodiment described above, the motor protector unit 1 includes the motor protector 2, the holder 3, and the connecting structure 70. The motor protector 2 includes the metal hermetic container 10, the two conductive terminal pins 20, and the opening/closing mechanism 30. The hermetic container 10 is configured to be hermetic and includes the housing 11 having an opening and an internal space, and the lid plate 12 provided on the housing 11 to cover the opening. Each conductive terminal pin 20 is provided on the lid plate 12 via the electrically insulating filler material 13, with one end inserted into the hermetic container 10 and the other end exposed outside the hermetic container 10. The opening/closing mechanism 30 is provided inside the hermetic container 10 and opens and closes an electrical connection between the two conductive terminal pins 20.

The holder 3 includes the wing parts 50 and the covering part 60. At least a part of the motor protector 2 is fitted into the covering part 60. The wing parts 50 are formed in a plate shape extending in a direction perpendicular to the longitudinal direction of the conductive terminal pins 20. The connecting structure 70 connects and secures the motor protector 2 and the holder 3 in a non-separable manner.

Accordingly, since the motor protector unit 1 is configured as one unit by the motor protector 2 and the holder 3 being connected and secured by the connecting structure 70, it is possible to prevent the motor protector 2 and the holder 3 from being separated from each other when the motor protector 2 and the holder 3 are attached to the motor 90. Therefore, workability in attaching the motor protector 2 to the motor 90 using the holder 3 can be improved.

The motor protector unit 1 of the embodiment is arranged along outer peripheral edge portions of the windings 91 and is attached such that the wing parts 50 of the holder 3 are located on the windings 91 side, that is, such that outer surfaces of the wing parts 50 contact the respective windings 91. Further, the motor protector unit 1 is arranged such that the heat generating members 40 face an outer peripheral side of the compressor container 81. The compressor 80 is driven by an inverter-controlled power supply, and a current at lock is set to be equal to or smaller than a current during normal overload operation. More specifically, when the compressor 80 is driven by an inverter-controlled power supply, the compressor 80 can set the current at lock to be equal to or smaller than the current during normal overload operation by being provided with the motor protector unit 1 described above.

Here, a state in which one or more phases of a three-phase power supply supplied to a motor are not energized due to disconnection of a power supply line, poor contact of a wire connection part, failure of a power supply control circuit, disconnection inside the motor, or the like is referred to as "phase loss." When the compressor is started and the motor is energized under a phase-loss state, torque becomes insufficient and the rotor of the motor is locked without rotating, and a starting current continues to flow through the motor. Since the starting current is larger than a normal operating current, if the starting current continues to flow through the motor under the phase-loss state, phase balance at the neutral point is lost and an abnormal current flows. In general, the starting current when the motor is started from such a phase-loss state is referred to as "phase-loss lock current."

When the rotor is locked due to phase loss, flow of refrigerant including refrigerating machine oil, i.e., lubricating oil, becomes sluggish, and consequently, the motor cannot be cooled by the refrigerant flow. If the phase-loss lock current continues to flow through the motor while the rotor remains locked, the motor temperature rapidly rises due to Joule heat generation, and in the worst case the motor may burn out. Therefore, it is important to detect the phase-loss lock current and cut off power supply to the motor.

However, in the case of an inverter-controlled motor, due to circumstances such as existence of operation modes of high voltage and large current, operating conditions may occur in which a difference between the phase-loss lock current and a rated maximum current of the motor becomes small. In this case, if an operating temperature required for the thermally responsive plate to operate is set in accordance with heat generation by the phase-loss lock current, the thermally responsive plate may operate even at or below the rated maximum current, which may cause excessive operation. Conversely, if the operating temperature required for the thermally responsive plate to operate is set high so that the thermally responsive plate does not operate even at the rated maximum current, it takes time for the temperature inside the motor protector to rise due to the phase-loss lock current. As a result, when phase-loss lock occurs, the thermally responsive plate cannot be heated to the operating temperature in a short time, and it takes time until the phase-loss lock current is interrupted by operation of the motor protector, during which the motor temperature may rise to a dangerous range.

Accordingly, the connecting structure 70 of the embodiment connects and secures the motor protector 2 and the holder 3 with the gaps S1 and S2 that allow refrigerant to pass between the motor protector 2 and the holder 3. This makes it possible to suppress occurrence of excessive operation in which the motor protector 2 operates at or below the rated maximum current, and occurrence of non-operation in which the motor protector 2 does not operate even under an abnormality due to overcurrent or lock current. Accordingly, since operation of the motor 90 at the rated maximum current is within a normal operation range, the compressor 80 does not stop and refrigerant in the compressor container 81 continues to flow. The refrigerant flowing in the compressor container 81 passes through the gaps S1 and S2 and cools the motor protector 2 itself. Therefore, even if the rated maximum current flows through the motor 90, the hermetic container 10 is cooled by being exposed to the refrigerant flow, thereby suppressing the temperature inside the hermetic container 10 from reaching the operating temperature of the thermally responsive plate 35. In this case, the motor protector 2 does thus not operate and power supply to the motor 90 continues.

In contrast, when an abnormality, such as phase-loss lock, occurs in the motor 90 and operation of the compression mechanism 82 stops, the refrigerant flow in the compressor container 81 decreases or no refrigerant flows. Cooling of the motor protector 2 by the refrigerant also decreases, and as a result, the temperature inside the hermetic container 10 rises. When the temperature inside the hermetic container 10 reaches the operating temperature of the thermally responsive plate 35, the thermally responsive plate 35 operates, that is, the motor protector 2 operates, and power supply to the motor 90 is cut off.

As described above, according to the motor protector unit 1 of the present embodiment, even when the rated maximum current of the motor 90 is close to the phase-loss lock current, the motor protector 2 is not operated in a case where the motor 90 is operated at or below the rated maximum current, whereas the motor protector 2 can be operated in a short time in a case where the motor 90 is locked and the phase-loss lock current flows. As a result, it is possible to reliably suppress occurrence of excessive operation at or below the rated maximum current and occurrence of non-operation even under an abnormality due to overcurrent or lock current. Such a motor protector unit 1 is more suitable for an electric compressor driven by an inverter-controlled power supply, in which current at lock is set to be equal to or smaller than current during normal overload operation.

Further, the covering part 60 further includes the upper surface part 63 covering the motor protector 2 on a side facing the lid plate 12 and the lower surface part 61 covering the motor protector 2 on a side opposite to the lid plate 12. The connecting structure 70 includes the holder-side member 71 and the protector-side member 72. The holder-side member 71 is provided on the upper surface part 63 and extends toward the lower surface part 61. The protector-side member 72 is provided on the lid plate 12 and extends toward the upper surface part 63. The motor protector 2 is fixed to the holder 3 in an orientation suspended from the upper surface part 63 by the holder-side member 71 and the protector-side member 72 being connected to each other. Since the motor protector 2 is thus fixed in a suspended orientation relative to the holder 3 by the connecting structure 70, the gaps S1 and S2 around the motor protector 2 can be made as large as possible. As a result, it becomes easier to ensure a certain amount of refrigerant flowing around the motor protector 2, and under normal operating conditions where refrigerant flow occurs, the motor protector 2 can be efficiently cooled, thereby suppressing malfunction of the motor protector 2.

The holder 3 is made of resin and further includes the upper hole 633 formed through the upper surface part 63. The holder-side member 71 is made of metal and further includes the insertion portion 711 and the engaging portion 712. The insertion portion 711 is a portion inserted into the upper hole 633 from an outer side toward an inner side of the upper surface part 63. The engaging portion 712 extends outward with respect to the extending direction of the insertion portion 711 and is a portion engaged with the upper surface part 63. The protector-side member 72 is made of metal and is welded and secured to the insertion portion 711. Thus, by welding and securing the holder-side member 71 and the protector-side member 72, which are metal members, of the connecting structure 70, the motor protector 2 can be more reliably fixed to the holder 3.

Further, the holder 3 further includes the lower hole 611 and the restricting parts 621 and 641. The lower hole 611 is formed through the lower surface part 61. The restricting parts 621 and 641 contact the motor protector 2 to restrict movement of the motor protector 2 toward the upper surface part 63. Thus, by welding and securing the holder-side member 71 and the protector-side member 72 of the connecting structure 70 in a state where the motor protector 2 is pressed against the restricting parts 621 and 641, the motor protector 2 and the holder 3 are fixed such that the holder 3 is sandwiched between the engaging portion 712 of the holder-side member 71 and the lid plate 12. As a result, looseness between the motor protector 2 and the holder 3 is reduced, and, for example, it is possible to suppress the motor protector 2 from falling out of the holder 3 due to vibration of the electric compressor 80 or the like.

The embodiment described above is presented as an example and is not intended to limit the scope of the invention. This novel embodiment can be implemented in various other forms, and various omissions, substitutions, and changes can be made without departing from the gist of the invention. The present embodiment and modifications thereof are included in the scope and gist of the invention and also included in the invention described in the claims and equivalents thereof.

## Claims

1. A motor protector unit comprising:
a motor protector including
a metal hermetic container configured to be hermetic and including a housing having an opening and an internal space, and a lid plate provided on the housing to cover the opening,
two conductive terminal pins provided on the lid plate via an electrically insulating filler material, one end of each conductive terminal pin being inserted into the hermetic container and the other end being exposed outside the hermetic container, and
an opening/closing mechanism provided inside the hermetic container to open and close an electrical connection between the two conductive terminal pins;
a motor protector holder including a covering part into which at least a part of the motor protector is fitted, and a wing part formed in a plate shape extending in a direction perpendicular to a longitudinal direction of the conductive terminal pins; and
a connecting structure that connects and secures the motor protector and the motor protector holder.

2. The motor protector unit according to claim 1, wherein the connecting structure connects the motor protector and the motor protector holder with a gap that allows refrigerant to pass between the motor protector and the motor protector holder.

3. The motor protector unit according to claim 2, wherein the covering part further includes an upper surface part covering the motor protector on a side facing the lid plate and a lower surface part covering the motor protector on a side opposite to the lid plate,
the connecting structure includes a holder-side member provided on the upper surface part and extending toward the lower surface part, and a protector-side member provided on the lid plate and extending toward the upper surface part, and
the motor protector is fixed to the motor protector holder in an orientation suspended from the upper surface part by the holder-side member and the protector-side member being connected to each other.

4. The motor protector unit according to claim 3, wherein the motor protector holder is made of resin and further includes an upper hole formed through the upper surface part,
the holder-side member is made of metal and further includes an insertion portion inserted into the upper hole from an outer side toward an inner side of the upper surface part, and an engaging portion extending outward relative to an extending direction of the insertion portion and engaged with the upper surface part, and
the protector-side member is made of metal and is welded and secured to the insertion portion.

5. The motor protector unit according to claim 4, wherein the motor protector holder further includes:
a lower hole formed through the lower surface part; and
a restricting part that contacts the motor protector to restrict movement of the motor protector toward the upper surface part.

6. An electric compressor comprising:
a motor including a compression mechanism and windings;
a compressor container housing the compression mechanism and the motor; and
the motor protector unit according to any one of claims 1 to 5 housed in the compressor container, wherein the motor protector is connected to a winding on a neutral-point side of the motor.
